# EUROPEAN PATENT SPECIFICATION

(11) **EP 2 760 805 B1**
(45) Date of publication and mention of the grant of the patent: **03.06.2015**
(21) Application number: 12784059.3
(22) Date of filing: 27.09.2012
(51) Int. Cl.: C04B 28/08

(54) **METHOD FOR THE PRODUCTION OF A BUILDING MATERIAL**
VERFAHREN ZUR HERSTELLUNG EINES BAUMATERIALS
PROCÉDÉ DE PRODUCTION D'UN MATÉRIAU DE CONSTRUCTION

(30) Priority: 29.09.2011 AT 14142011
(43) Date of publication of application: 06.08.2014
(73) Proprietor: Holcim Technology Ltd., 8645 Rapperswil-Jona (CH)
(72) Inventor: BAALBAKI, Moussa, CH-5103 Möriken (CH); KO, Suz-Chung, CH-5600 Lenzburg (CH)
(74) Representative: Keschmann, Marc
(86) International application number: PCT/IB2012/001901
(87) International publication number: WO 2013/046000

(56) References cited:
- WO-A2-2005/097701
- DE-A1- 4 324 334
- US-A1- 2007 221 100

## Description

The present invention relates to a method for the production of a building material, in particular mortar or concrete from an alkali activated hydraulic binder, in which at least one dispersing agent and at least one set modifier is added to the mix according to claim 1.

Alkali activated aluminium silicate binders (AAAS) are cement-like materials, that are formed by converting fine-grained silica- and alumina-solids with an alkali- or alkali-salt solution for forming gels and crystalline compounds.

During alkali activation a high concentration of OH-ions in the mixture acts on the aluminium silicates. While in Portland-cement paste due to the solubility of calcium hydroxide a pH-value of greater than 12 is attained, the pH-value in the AAAS-system is even greater than 13,5. The amount of alkali, normally being in the range of 2 to 25 % (w/w) alkali (> 3 % (w/w) Na₂O), depends on the alkalinity of the aluminium silicates.

The reactivity of an AAAS-binder depends on its chemical and mineral composition, the degree of vitrification and the fineness of grinding. In general, AAAS-binders start to set within 15 minutes and on the long run offer rapid curing and considerable increase in strength. The setting reaction and the curing process are not yet fully understood.

For producing high strength and durable building materials it is required to keep a relatively low water/binder-ratio when mixing the building material, so that particularly dense and thus strong crystal structures result from the curing of the alkali activated binder. A low water/binder-ratio involves the drawback that the building material provides unfavourable rheological properties. The flowability of the building materials prior to setting is rather poor in such building materials so that the casting or spraying of such building materials can only be carried out in a limited manner or not at all.

The addition of dispersing agents and set modifiers to hydraulic binders has been known for a long time and there are different approaches to influence the rheological properties, the duration of workability as well as the setting properties with respect to the strength values that can be reached with the building material - as a rule concrete or mortar - produced with the respective binders, according to varying requirements by the addition of these compounds.

EP1735252B1 discloses an alkali activated hydraulic binder for the preparation of building material in form of mortar, comprising blast furnace slag and an alkaline activator. The binder mixture comprises a plasticizer/superplasticizer and Portland cement clinker as setting accelerator.

Set modifiers provide a delay in the setting of the cement and hence allow for an extension of the workability of concrete.

Dispersing agents, also called concrete-liquefiers, flow agents, plasticizers or super-plasticizers are deployed in order to improve workability with regard to flowability. These additives are long chained organic molecules, that group around the cement particles and thus either bring about electrostatic repulsion between the particles or steric stabilisation of the particles, thereby increasing flowability of the building material. At pH-values prevailing in alkali activated hydraulic binders most of the known dispersing agents however are not stable, so that the known addition does not yield the desired results and moreover often brings about reduced values of end-strength.

It is hence an object of the present invention to improve a method of the initially mentioned kind to the extent that also when using alkali activated hydraulic binders improved workability or flowability can be achieved without decreasing end-strength inappropriately. The invention shall result in workability and desirable strength values even at a low water/binder-ratio of < 0,5, in particular < 0,45.

To solve this object, a method of the initially mentioned kind, according to claim 1, is developed such that at least the dispersing agent is added after the steps of mixing the binder with water. This means that first of all the hydraulic binder is thoroughly mixed with water until a homogenous mass is formed and that only afterwards the dispersing agent is added. Applicant has observed that the inventive delayed addition of the dispersing agent provides for appropriate flowability and sufficient strength values.

It is important for the present invention that the addition of at least the dispersing agent is carried out only after the mixing step. In doing so it is preferred that the dispersing agent and, optionally, the set modifier is added 2 to 60 minutes, in particular 3 to 10 minutes after the step of mixing the binder with water, in particular after the end of the addition of the water.

According to a preferred embodiment of the present invention, the method is devised such that the dispersing agent and the set modifier are added simultaneously. This means that the dispersing agent and the set modifier are added at the same time, but in any case only after the step of mixing the binder with water, wherein it is preferred to add the dispersing agent and the set modifier 2 to 5 minutes, in particular 3 minutes after the step of mixing the binder with the water, in particular after the addition of water. In doing so, particular advantageous results were achieved as will be exemplified below.

Referring to a further advantageous embodiment of the present invention it is provided to add the set modifier together with the water when mixing the binder and to add the dispersing agent 30 to 60 minutes, in particular 40 to 50 minutes, in particular 45 minutes after the step of mixing the binder with the water. Also with this procedure satisfying results were achieved.

The dispersing agent is selected from the group consisting of melamine sulfonate polycondensates, polynapthalene-sulphonatepolycodensates and polycarboxylate ethers. These are known and commercially available dispersing agents that surprisingly provide, when proceeded as described, the desired properties with regard to flowability, i.e. workablility also in alkali activated binders.

The set modifier is selected from the group consisting of modified salts of lignosulphate acids, in particular Na-, Ca- or NH₄ salts, salts of hydroxycarboxylic acids, in particular Na-, Ca- or Triethanolamine salts of adipic-, gluconic-, tartric-, succinic-, citric- and heptonic acid, carbohydrates as well as polysaccharides and their derivatives.

In the course of the experiments that have brought about the findings of the present invention, it has turned out to be of advantage if the set modifier and/or the dispersing agent is added in amounts of 0,025 to 1,5 % (w/w), in particular 0,25 to 1,5 % (w/w) in relation to the binder.

For achieving the early strength and the end-strength as well as the durability desired in the present invention, it is preferred to mix the building material with a water/binder-ratio of less than 0,5, in particular with a water/binder-ratio of less than 0,45.

In principle, the inventive method can be applied to all building materials on the basis of alkali activated binders. It is however particularly preferred that the hydaulic binder essentially consists of slag, in particular blast furnace slag in amounts of ≥ 20 % (w/w), aluminium silicates different from blast furnace slag, preferably fly ash and natural aluminium silicates, preferably basalts, clays, marl, andesites or zeolithes, in amounts of 5 % (w/w) to 75 % (w/w) and an alkali activator in an amount corresponding to an Na₂O equivalent, defined as (Na₂O + 0,658 K₂O) (ASTM C 150) between 0,7 % (w/w) and 4 % (w/w). Such a building material is for example disclosed in EP 1735252 B1 of the applicant.

The invention is described in the following in more detail by way of exemplary and comparative examples. In all the examples an alkali activated hydraulic binder having the following composition is used as binder:

| | % (w/w) |
|---|---|
| Ground blast furnace slag | 90 |
| Na₂CO₃ | 5 |
| Portland Cement | 5 |

This binder was mixed with water in a water/binder ratio (W/B) of 0,45.

### Example 1

| | |
|---|---|
| Binder [% (w/w)] | 100 |
| Set modifier [% (w/w)] | 0 |
| Dispersing agent [% (w/w)] | 0 |
| Addition time set modifier [min] *) | --- |
| Addition time dispersing agent [min] *) | --- |
| W/B | 0,45 |
| Workability after 10 min | 157 |
| Workability after 45 min | 124 |
| Compressive strength after 1 day [MPa] | 13,22 |
| Compressive strength after 2 days [MPa] | 22,28 |
| Compressive strength after 28 days [MPa] | 45,20 |

| | |
|---|---|
| *) time after addition of water | |

Workability was determined according to the HolcimCone™ Flow-Method. This method uses a modified cone to measure the slump of fresh mortar samples, which correlates well to the slump of the concrete. The cone in this method is half as high as the cone in the method according to ASTM C 143.

### Example 2

| | |
|---|---|
| Binder [% (w/w)] | 100 |
| Set modifier [% (w/w)] | 0,75 |
| Dispersing agent [% (w/w)] | 0 |
| Addition time set modifier [min] *) | 3 |
| Addition time dispersing agent [min] *) | --- |
| W/B | 0,45 |
| Workability after 10 min | 187 |
| Workability after 45 min | 197 |
| Compressive strength after 1 day [MPa] | 9,9 |
| Compressive strength after 2 days [MPa] | 18,4 |
| Compressive strength after 28 days [MPa] | 41,0 |

### Example 3

| | |
|---|---|
| Binder [% (w/w)] | 100 |
| Set modifier [% (w/w)] | 0 |
| Dispersing agent [% (w/w)] | 1,0 |
| Addition time set modifier [min] *) | --- |
| Addition time dispersing agent [min] *) | 3 |
| W/B | 0,45 |
| Workability after 10 min | 212 |
| Workability after 45 min | 145 |
| Compressive strength after 1 day [MPa] | 12,7 |
| Compressive strength after 2 days [MPa] | 20,6 |
| Compressive strength after 28 days [MPa] | 39,6 |

### Example 4

| | |
|---|---|
| Binder [% (w/w)] | 100 |
| Set modifier [% (w/w)] | 0,75 |
| Dispersing agent [% (w/w)] | 1,0 |
| Addition time set modifier [min] *) | 3 |
| Addtion time dispersing agent [min] *) | 3 |
| W/B | 0,45 |
| Workability after 10 min | 272 |
| Workability after 45 min | 255 |
| Compressive strength after 1 day [MPa] | 8,1 |
| Compressive strength after 2 days [MPa] | 16,8 |
| Compressive strength after 28 days [MPa] | 37,7 |

### Example 5

| | |
|---|---|
| Binder [% (w/w)] | 100 |
| Set modifier [% (w/w)] | 0,75 |
| Dispersing agent [% (w/w)] | 1,0 |
| Addition time set modifier [min] *) | 0 |
| Addition time dispersing agent [min] *) | 0 |
| W/B | 0,45 |
| Workability after 10 min | 256 |
| Workability after 45 min | 263 |
| Compressive strength after 1 day [MPa] | 6,5 |
| Compressive strength after 2 days [MPa] | 12,7 |
| Compressive strength after 28 days [MPa] | 32,3 |

### Example 6

| | |
|---|---|
| Binder [% (w/w)] | 100 |
| Set modifier [% (w/w)] | 0,75 |
| Dispersing agent [% (w/w)] | 1,0 |
| Addition time set modifier [min] *) | 0 |
| Addition time dispersing agent [min] *) | 45 |
| W/B | 0,45 |
| Workability after 10 min | 199 |
| Workability after 45 min | 257 |
| Compressive strength after 1 day [MPa] | 8,0 |
| Compressive strength after 2 days [MPa] | 15,3 |
| Compressive strength after 28 days [MPa] | 35,8 |

### Example 7

| | |
|---|---|
| Binder [% (w/w)] | 100 |
| Set modifier [% (w/w) ] | 0,75 |
| Dispersing agent [% (w/w)] | 1,0 |
| Addition time set modifier [min] *) | 45 |
| Addition time dispersing agent [min] *) | 0 |
| W/B | 0,45 |
| Workability after 10 min | 191 |
| Workability after 45 min | 248 |
| Compressive strength after 1 day [MPa] | 3,3 |
| Compressive strength after 2 days [MPa] | 17,7 |
| Compressive strength after 28 days [MPa] | 45,7 |

In all the examples the % (w/w) values are in relation to the binder.

In all the examples Na-lignosulfonate was used as set modifier and Polycarboxylate-ether as dispersing agent. Comparable examples can, however, be observed with other set modifiers and dispersing agents.

The above examples were carried out in order to determine under which conditions a workability of more than 250 mm after 45 min, a compressive strength of more than 8 MPa after 1 day (early strength) and a compressive strength of more than 35 MPa after 28 days (end strength) can be achieved.

The examples show that the desired workability cannot be achieved when neither a dispersing agent nor a set modifier (example 1), only a set modifier (example 2), or only a dispersing agent (example 3), are used. The desired workability can only be achieved when a dispersing agent as well as a set modifier are used (examples 4 to 7). However, in this case the timepoint of the addition of the dispersing agent and the set modifier have to be carefully chosen in order to achieve sufficient strength. Example 5 shows that the addition of dispersing agent and set modifier together with water leads to strength values that are significantly below the objective. With the inventive delayed addition of the set modifier and the dispersing agent however satisfactory strength values are achieved (example 4). If the set modifier is added in a usual manner together with the water, it is advantageous to add the dispersing agent as late as possible, for example directly at the construction site, for achieving the objective for the strength values (see example 6 according to the invention). Example 7 shows that in the case of conventional addition of the dispersing agent together with water workability can be improved by the addition of the set modifier. However, the early strength values are not satisfactory also when adding the set modifier very late.

It has been shown that only the inventive method of addition according to examples 4 and 6 is capable of fulfilling the objectives for workability and strength.

## Claims

1. Method for the production of a building material, in particular mortar or concrete, comprising providing an alkali activated hydraulic binder and mixing the hydraulic binder with water in order to obtain a mixture, said mixture containing at least one dispersing agent selected from the group consisting of melamine sulfonate polycondensates, polynapthalene-sulphonatepolycondensates and polycarboxylate ethers, and at least one set modifier selected from the group consisting of modified salts of lignosulphate acids, in particular Na-, Ca- or NH₄ salts, salts of hydroxycarboxylic acids, in particular Na-, Ca- or Triethanolamine salts of adipic-, gluconic-, tartric-, succinic-, citric- and heptonic acid, carbohydrates as well as polysaccharides and their derivatives, **characterized in that** at least the dispersing agent is added after the step of mixing the binder with water.

2. Method according to claim 1, **characterized in that** the dispersing agent and, optionally, the set modifier is added 2 to 60 minutes, in particular 3 to 10 minutes after the step of mixing the binder with water, in particular after the end of the addition of the water.

3. Method according to claim 1 or 2, **characterized in that** the dispersing agent and the set modifier are added simultaneously.

4. Method according to claim 3, **characterized in that** the dispersing agent and the set modifier are added 2 to 5 minutes, in particular 3 minutes after the step of mixing the binder with the water.

5. Method according to claim 1 or 2, **characterized in that** the set modifier is added together with the water when mixing the binder and the dispersing agent is added 30 to 60 minutes, in particular 40 to 50 minutes, in particular 45 minutes after the step of mixing the binder with the water.

6. Method according to any one of claims 1 to 5, **characterized in that** the set modifier and/or the dispersing agent is added in amounts of 0,025 to 1,5 % (w/w), in particular 0,25 to 1,5 % (w/w) in relation to the binder.

7. Method according to any one of claims 1 to 6, **characterized in that** the mixture has a water/binder-ratio of less than 0,5, in particular a water/binder-ratio of less than 0,45.

8. Method according to any one of claims 1 to 7, **characterized in that** the binder essentially consists of slag, in particular blast furnace slag, in amounts of ≥ 20 % (w/w), aluminium silicates different from blast furnace slag, preferably flue ash and natural aluminium silicates, preferably basalts, clays, marl, andesites or zeolithes, in amounts of 5 % (w/w) to 75 % (w/w) and an alkali activator in an amount corresponding to an Na₂O equivalent (defined as Na₂O + 0,658 K₂O) (ASTM C 150) between 0,7 % (w/w) and 4 % (w/w).

## Patentansprüche

1. Verfahren zur Herstellung eines Baustoffs, insbesondere Mörtels oder Betons, umfassend das Bereitstellen eines alkaliaktivierten hydraulischen Bindemittels und Anmischen des hydraulischen Bindemittels mit Wasser um eine Mischung zu erhalten, wobei besagte Mischung zumindest ein Dispergiermittel ausgewählt aus der Gruppe bestehend aus Melamin-Sulfonatpolykondensaten, Polynaphthalen-Sulfonatpolykondensaten und Polycarboxylatethern und zumindest ein Abbindesteuerungsmittel ausgewählt aus der Gruppe bestehend aus modifizierten Salzen von Lignosulfatsäuren, insbesondere Na-, Ca- oder NH4-Salzen, Salzen von Hydroxycarbonsäuren, insbesondere Na-, Ca- oder Triethanolaminsalzen von Adipin, Glucon-, Wein-, Bernstein-Zitronen- und Heptonsäure, Kohlenhydraten sowie Polysacchariden und deren Derivate enthält, **dadurch gekennzeichnet, dass** zumindest das Dispergiermittel nach dem Anmischen des Bindemittels mit Wasser zugegeben wird.

2. Verfahren nach Anspruch 1, **dadurch gekennzeichnet, dass** das Dispergiermittel und ggf. das Abbindesteuerungsmittel 2 bis 60 Minuten, insbesondere 3 bis 10 Minuten nach dem Anmischen des Bindemittels mit Wasser, insbesondere nach der Wasserzugabe, insbesondere nach dem Ende der Wasserzugabe, zugegeben wird.

3. Verfahren nach Anspruch 1 oder 2, **dadurch gekennzeichnet, dass** das Dispergiermittel und das Abbindesteuerungsmittel gleichzeitig zugegeben werden.

4. Verfahren nach Anspruch 3, **dadurch gekennzeichnet, dass** das Dispergiermittel und das Abbindesteuerungsmittel 2 bis 5 Minuten, insbesondere 3 Minuten nach dem Anmischen des Bindemittels mit Wasser zugegeben werden.

5. Verfahren nach Anspruch 1 oder 2, **dadurch gekennzeichnet, dass** das Abbindesteuerungsmittel zusammen mit dem Wasser beim Anmischen des Bindemittels zugegeben wird und das Dispergiermittel 30 bis 60 Minuten, insbesondere 40 bis 50 Minuten, insbesondere 45 Minuten nach dem Anmischen des Bindemittels mit Wasser zugegeben wird.

6. Verfahren nach einem der Ansprüche 1 bis 5, **dadurch gekennzeichnet, dass** das Abbindesteuerungsmittel und/oder das Dispergiermittel in Mengen von 0,025 bis 1,5 Gew.-%, insbesondere 0,25 bis 1,5 Gew.-% bezogen auf das Bindemittel zugegeben wird.

7. Verfahren nach einem der Ansprüche 1 bis 6, **dadurch gekennzeichnet, dass** die Mischung mit einem Wasser/Sindemittel-Verhältnis von weniger als 0,5, insbesondere mit einem Wasser/Bindemittel-Verhältnis von weniger als 0,45 angemischt wird.

8. Verfahren nach einem der Ansprüche 1 bis 7, **dadurch gekennzeichnet, dass** das Bindemittel im Wesentlichen aus Schlacke, insbesondere Hochofenschlacke, in Mengen von ≥ 20 Gew.-%, von Hochofenschlacke verschiedene Aluminiumsilikate, vorzugsweise Flugasche und natürliche Aluminiumsilikate, vorzugsweise Basalt, Tone, Mergel, Andesite oder Zeolithe, in Mengen von 5 Gew.-% bis 75 Gew.-% besteht und ein Alkaliaktivator in einer Menge, welche einem Na₂O Equivalent definiert als (Na₂O + 0,658 K₂O) (ASTM C 150) zwischen 0,7 Gew.-% und 4 Gew.-% entspricht, eingesetzt wird.

## Revendications

1. Procédé pour la production d'un matériau de construction, en particulier, de mortier ou de béton, comprenant l'étape consistant à partir d'un liant hydraulique à activation alcaline et à mélanger le liant hydraulique avec de l'eau afin d'obtenir un mélange, ledit mélange contenant au moins un agent dispersant choisi dans le groupe constitué par les polycondensats de sulfonate de mélamine, les polycondensats de sulfonate de polynaphtalène et les éthers de polycarboxylate, et au moins un modificateur de prise choisi dans le groupe constitué par les sels modifiés d'acides lignosulfates, en particulier les sels de Na, Ca ou NH₄, les sels d'acides hydroxycarboxyliques, en particulier les sels de Na, Ca ou triéthanolamine d'acide adipique, gluconique, tartrique, succinique, citrique et heptonique, les glucides ainsi que les polysaccharides et leurs dérivés, **caractérisé en ce qu'**au moins l'agent dispersant est ajouté après l'étape de mélange du liant avec l'eau.

2. Procédé selon la revendication 1, **caractérisé en ce que** l'agent dispersant et, facultativement, le modificateur de prise sont ajoutés 2 à 60 minutes, en particulier 3 à 10 minutes après l'étape de mélange du liant avec l'eau, en particulier, à la fin de l'addition de l'eau.

3. Procédé selon la revendication 1 ou 2, **caractérisé en ce que** l'agent dispersant et le modificateur de prise sont ajoutés simultanément.

4. Procédé selon la revendication 3, **caractérisé en ce que** l'agent dispersant et le modificateur de prise sont ajoutés 2 à 5 minutes, en particulier 3 minutes après l'étape de mélange du liant avec l'eau.

5. Procédé selon la revendication 1 ou 2, **caractérisé en ce que** le modificateur de prise est ajouté en même temps que l'eau lors du mélange du liant et l'agent dispersant est ajouté 30 à 60 minutes, en particulier 40 à 50 minutes, en particulier 45 minutes après l'étape de mélange du liant avec l'eau.

6. Procédé selon l'une quelconque des revendications 1 à 5, **caractérisé en ce que** le modificateur de prise et/ou l'agent dispersant est/sont ajouté(s) en des quantités de 0,025 à 1,5% (p/p), en particulier 0,25 à 1,5 % (p/p) par rapport au liant.

7. Procédé selon l'une quelconque des revendications 1 à 6, **caractérisé en ce que** le mélange a un rapport eau/liant inférieur à 0,5, en particulier un rapport eau/liant inférieur à 0,45.

8. Procédé selon l'une quelconque des revendications 1 à 7, **caractérisé en ce que** le liant est essentiellement constitué de laitier, en particulier de laitier de haut fourneau, en des quantités ≥ 20 % (p/p), de silicates d'aluminium différents des laitiers de haut fourneau, de préférence, des cendres volantes et des silicates d'aluminium naturels, de préférence, des basaltes, des argiles, de la marne, des andésites ou des zéolithes, en des quantités de 5 % (p/p) à 75 % (p/p), et d'un activateur alcalin en une quantité qui correspond à un équivalent de Na₂O (défini en tant que Na₂O + 0,658 K₂O) (ASTM C 150) entre 0,7 % (p/p) et 4 % (p/p).
